# EUROPEAN PATENT APPLICATION

(11) **EP 4 663 020 A1**
(43) Date of publication of application: **17.12.2025**
(21) Application number: 24181815.2
(22) Date of filing: 12.06.2024
(51) Int. Cl.: A01N 65/12, A01N 65/28, A01N 65/06, A01N 25/30, A01P 7/04

(54) **INSECTICIDE**

(71) Applicant: RUST-CORP PTY LTD, Sydney NSW 2100 (AU)
(72) Inventor: STECK, Rudolf, 8306 Brüttisellen (CH)
(74) Representative: Keller Schneider Patent- und Markenanwälte AG

(57) **Abstract**

The present invention relates to an insecticide comprising
- thistle oil and/or rapeseed oil,
- a first component (A) based on tea tree leaves and/or tea tree wood,
- a second component (B) based on black pine resin and/or scots pine resin, as well as
- at least one emulsifier.

## Description

### Technical field

The present invention relates to an insecticide as well as to a method for producing the insecticide.

### Prior art

Insecticides are chemicals that are used to control insects either by killing them or by stopping them from participating in undesired or damaging activity. Insecticides have several applications in health, agriculture, and industry. Insects pose a significant hazard to crops because they can destroy plant leaves, roots, and stems, turning them unsuitable for food or other uses and perhaps damaging the plants. For the best crop protection against these pests - some of which only feed on specific crops - insecticides must be used. The most widely used form of insecticides are synthetic insecticides, since they can be poisonous to a broad variety of insect species. Among the most common form of synthetic pesticides are for example chlorinated hydrocarbons, organophosphates and carbamates.

However, the use of synthetic insecticides has various disadvantages. There is no possibility to limit the action of these compounds only to crop areas. Significant parts of insecticides penetrate into the surrounding farmland ecosystems and act destructively, for example on invertebrates and vertebrates. Synthetic insecticides have a long half-life which causes their retention in the environment for long periods of time. Furthermore, these compounds have a tendency to accumulate in different trophic levels of the food net, bearing a lot of health risks for a wide range of animal species.

There are already attempts to provide more environmental-friendly plant protection products against pests.

WO 2020/173987 A1 (Seedforward GmbH) describes a composition for improving the resistance to diseases and pests of seed seedlings. The composition comprises a liquid component comprising binders, vegetable oils, surface-active substances, carboxylic acid and plant extracts. In one embodiment, the liquid component may comprise extracts from plant materials. The extracts may be present in an aqueous solution obtained by, for example, mixing crushed plant material and water, allowing to settle and separating the solids from the resulting aqueous solution.

US 2007/0237837 (Biomar Israel Ltd.) describes a biocide which can be used as fungicide, for example. The biocide comprises tea tree oil, and a water emulsion containing as emulsifier an aqueous solution of a reaction product of an organic fatty acid and an alkali metal or ammonium compound. In one embodiment, the biocidal emulsion additionally contains essential oils.

However, the currently known alternatives for more environmental-friendly plant protection products still show the above mentioned problems, thus still being detrimental to the environment.

There is therefore still a need for improved solutions.

### Disclosure of the invention

The present invention has the task of providing a solution which at least minimizes the above mentioned disadvantages, especially in the field of insecticides. In particular, one task of the invention is to provide an environmental-friendly insecticide which has a low impact on the environment. Furthermore it is a task of the invention to provide a method for producing such an insecticide.

These tasks are solved by the features of independent claim 1 and the method of independent claim 10.

In a first aspect, the invention therefore relates to an insecticide comprising
- thistle oil and/or rapeseed oil,
- a first component (A) based on tea tree leaves and/or tea tree wood,
- a second component (B) based on black pine resin and/or scots pine resin,
   as well as
- at least one emulsifier.

It has been shown that the insecticide according to the invention is very effective against aphids, especially green apple, mealy apple, nettle and lettuce aphids, thrips, especially flower, leel< and onion thrips, whiteflies spider mites, stink bugs and rape blossom beetles.

An additional advantage of the insecticide according to the invention is that it is a selective insecticide. This means that the insecticide only damages and/or kills specific target insects. These target insects are described below in more detail. Non-target insects, i.e. insects that are not target insects, as well as other animal or plant species are not affected detrimentally by the insecticide according to the invention. Furthermore, the insecticide comprises mainly natural components, which makes it environmental-friendly. In further tests, the insecticide according to the invention had no negative effect on water fleas, emphasizing a non-toxic nature of the insecticide, except for the targeted insects.

The term "based on" means that tea tree leaves, tea tree wood, black pine resin and/or scots pine resin are used as raw materials for the first component (A) or the second component (B), respectively. The raw materials may be treated with different methods to release the components. Preferably the raw materials are treated chemically and/or mechanically, in particular by solid-liquid-extraction. Preferably, the thistle oil and/or rapeseed oil are used as solvent to extract the first component (A) and the second component (B) from the raw materials.

The term "thistle" refers to the tribe Cardueae, which is a tribe of flowering plants in the daisy family Asteraceae and the subfamily Carduoideae. Most of them are commonly known as "thistles".

The term "rapeseed" refers to the seed of several cultivars of the plant family Brassicaceae, e.g. *Brassica napus, Brassica rapa* subsp. *oleifera.* Other names for rapeseed oil are for example turnip (seed) oil, colza (seed) oil, Brassica napus seed oil or Rapae oleum.

Preferably, the thistle oil is safflower oil extracted from the safflower (*Carthamus tinctorius*).

In another preferred embodiment, the tea tree leaves and/or the tea tree wood are from the plant genus *Melaleuca,* especially from *Melaleuca alternifolia.*

In particular, the black prine resin is from the plant genus *pinus,* especially from *pinus nigra.*

Preferably, the scots pine resin is from the plant genus *pinus,* especially from *pinus sylvestris.*

In a preferred embodiment, the first component (A) is present as a pure liquid extract and/or as a liquid extract containig solid particles.

In another special embodiment, the second component (B) is present as a pure liquid extract and/or as a liquid extract containig solid particles.

In a preferred embodiment, the insecticide according to the invention additionally comprises water, preferably distilled water.

The addition of water provides an aqueous insecticide solution. This aqueous insecticide solution is present as a diluted form of the insecticide. Preferably, the insecticide and the aqueous insecticide solution have the same efficiency. By dilution of the insecticide with water, the resulting aqueous insecticide solution is even more environmental-friendly because of ist higher water concentration and lower insecticide concentration.

Furthermore, the insecticide can be diluted to a concentration suitable for the immediate use by a private person, e.g. a hobby gardener.

Preferably, the first component (A) and the second component (B) are present as liquid extracts in the thistle oil and/or rapeseed oil.

This embodiment has the advantage of providing a mainly homogeneous solution for an easy application of the insecticide, in particular for spray application.

Especially, the insecticide is effective against sucking insects.

Sucking insects have piercing-sucking mouthparts and feed on the sap of plants leading to the removal of nutrients from the plants. This can cause a.o. growth restrictions, lead to the death of at least a part of the plant or have negative effects on the yield in crop plants. Examples of sucking insects are aphids, especially green apple, mealy apple, nettle and lettuce aphids, thrips, especially flower, leel< and onion thrips, whiteflies, spider mites, stink bugs and rape blossom beetles.

These insects, against which the insecticide is effective, are referred to hereinafter as "target insects". All other insects are referred to as "non-target insects".

This provides an efficient protection for fruit and vegetables, especially apples, strawberries, brussel sprouts, onions, leel<, nettle, salads and rapeseed, as well as for outdoor plants and indoor houseplants by reducing damages on the crops caused by the target insects and improving the yield of these plants. Usually, non-target insects as well as other animal species and plants are less damaged by the insecticide according to the invention, providing a more environmental-friendly insecticide.

Preferably, the emulsifier is selected from the group of poly-ethoxylated esters, polysorbates, glyceryl esters and/or derivates thereof.

These types of emulsifiers provide excellent emulsifying and solubilizing properties.

Especially preferred, the emulsifier is selected from Croda Sp Tween^{™} 22 and/or Croda Etocas^{™} 35.

Croda Sp Tween^{™} 22 offers an enhanced surface activity to provide better wetting, lower equilibrium surface tension and lower contact angle. Etocas^{™} 35 is a vegetable-derived, nonionic surfactant used in a wide range of household, industrial and institutional applications. It is commonly used in hair care, fabric & laundry care, hard surface cleaning, vehicle care and waxes & polishes applications.

However, it is also possible that the insecticide comprises other and/or additional emulsifiers not mentioned here.

In a special embodiment, the insecticide comprises 1 - 10 wt. Y, preferably 2 - 8 wt. Y, in particular 3 - 6 wt. Y, especially 4 wt. Y, of emulsifier, based on the total weight of the insecticide.

This allows for a uniform distribution of all ingredients and thus for a homogeneous insecticide. Based on this, the insecticide is easily applicable, in particular in spray application.

In an extraordinarily preferred embodiment, the insecticide comprises 4 wt. % Croda Sp Tween^{™} 22 and 4 wt. % Croda Etocas^{™} 35, based on the total weight of the insecticide.

In another preferred embodiment, the ratio between i) a mixture of the thistle oil and/or rapeseed oil, the first component (A), the second component (B) and the at least one emulsifier and ii) water is between 1:50 and 1:150, preferably between 1:60 and 1:140, in particular between 1:80 and 1:120, especially 1:100
This ratio provides an efficient aqueous insecticide solution which is environmental-friendly.

Preferably, the tea tree leaves and/or tea tree wood are present in crushed form.

In crushed form, the tea tree leaves and/or the tea tree wood show a higher total surface area compared to uncrushed tea tree leaves and/or tea tree wood. Therefore, an extraction of the first component (A) can be performed more quickly and more efficiently. A total surface area is defined as the sum of the surface areas of all tea tree leaves and/or tea trea wood in crushed form.

In another preferred embodiment, the black pine resin and/or scots pine resin are present in crushed form.

In crushed form, the black pine resin and/or scots pine resin show a higher total surface area compared to uncrushed black pine resin and/or scots pine resin. Therefore, an extraction of the second component (B) can be performed more quickly and more efficiently. A total surface area is defined as the sum of the surface areas of all black pine resin and/or scots pine resin in crushed form.

In a second aspect, the invention relates to a method for producing an insecticide, especially an insecticide as described above, comprising the steps of:
a) mixing a thistle oil and/or rapeseed oil, tea tree leaves and/or tea tree wood and black pine resin and/or scots pine resin;
b) treating the mixture from step a) for 1 to 3 hours, preferably for 2 hours, at a temperature of 50 - 60 °C, preferably 55 - 60 °C, while stirring the mixture regularly;
c) separating a biomass from a liquid component of the mixture from step b)
d) adding at least one emulsifier to the liquid component from step c) to obtain a concentrate.

This method of production provides an efficient,environmental-friendly and more selective insecticide.

Furthermore, by using the method according to the invention, it is possible to realize a very simple production of an effective insecticide, i.e. one that requires only a few simple pieces of equipment.

In a preferred embodiment, the method comprises the following steps:
a1) mixing the thistle oil and/or rapeseed oil, the tea tree leaves and/or tea tree wood and the black pine resin and/or scots pine resin;
b1) treating the mixture from step a1) for 1 to 3 hours, preferably for 2 hours, at a temperature of 50 - 60 °C, preferably 55 - 60 °C, while stirring the mixture regularly;
c1) separating a biomass from a liquid component of the mixture from step b1)
d1) pressing the biomass from step c1) to obtain a liquid residue,
e1) mixing the liquid residue from step d1) with the liquid component from step c1) to obtain a complete liquid solution,
f1) adding the at least one emulsifier to the complete liquid solution from step e1) to obtain a concentrate.

Through this method it is possible to extract as much of the first component (A) and/or the second component (B) from the tea tree leaves, tea tree wood, black pine resin and/or scots pine resin, respectively. This prevents waste and enhances the yield of the components.

In another preferred embodiment, an additional step of the method comprises diluting the concentrate with water, preferably distilled water, where the ratio between the concentrate and the water is between 1:50 and 1:150, preferably between 1:60 and 1:140, in particular between 1:80 and 1:120, especially 1:100.

The dilution of the concentrate with water provides an efficient aqueous insecticide solution. By diluting the concentrate with water, the aqueous insecticide solution is even more environmental-friendly. Furthermore, less insecticide concentrate needs to be used.

Especially, the efficiency of the concentrate and the aqueous insecticide solution are the same.

In a further preferred embodiment, the total amount of thistle oil and/or rapeseed oil is 0.6 - 1.2 L, preferably 0.7 - 1.1 L, in particular 0.8 - 1 L, especially 0.9 L.

In another advantageous embodiment, the total amount of tea tree leaves and/or tea tree wood is 20 - 370 g, preferably 30 - 350 g, in particular 40 - 320 g, especially 50 - 300 g, per 1 L of thistle oil and/or rapeseed oil.

Preferably, the total amount of black pine resin and/or scots pine resin is 3 - 55 g, preferably 5 - 50 g, in particular 7 - 45 g, especially 10 - 40 g per 1 L of thistle oil and/or rapeseed oil.

In a special embodiment, the weight ratio between i) the thistle oil and/or rapeseed oil and ii) the tea tree leaves and/or the tea tree wood is between 1:1 and 20:1, preferably between 2:1 and 19:1, in particular between 3:1 and 18:1.

In a further preferred embodiment, the weight ratio between i) the thistle oil and/or rapeseed oil and ii) the tea tree leaves and/or the tea tree wood is exactly 3:1.

In another special embodiment, the weight ratio between i) the thistle oil and/or rapeseed oil and ii) the tea tree leaves and/or the tea tree wood is exactly 18:1.

In a further special embodiment, the weight ratio between i) the thistle oil and/or rapeseed oil and ii) the black pine resin and/or scots pine resin is between 100: 1 and 10:1, preferably between 95:1 and 15:1, in particular between 90:1 and 22.5:1.

Especially, the weight ratio between i) the thistle oil and/or rapeseed oil and ii) the black pine resin and/or scots pine resin is exactly 90:1.

In another special embodiment, the weight ratio between i) the thistle oil and/or rapeseed oil and ii) the black pine resin and/or scots pine resin is exactly 22.5:1.

In particular, the weight ratio of i) the tea tree leaves and/or the tea tree wood and ii) the black pine resin and/or scots pine resin is between 0.5:1 and 50:1, preferably between 1:1 and 40:1, especially between 1.25:1 and 30:1.

In a most preferred embodiment, the step of pressing of the biomass is performed while the biomass has a temperature of 20 - 60 °C, preferably 30 - 60 °C, in particular 40 - 60 °C.

However, it is also possible that the step of pressing of the biomass is performed while the biomass has a temperature lower than 20 °C or higher than 60 °C.

In a special embodiment, the black pine resin and/or scots pine resin are harvested by hand.

This ensures an environmental-friendly extraction of resin.

Further advantageous embodiments and combinations of features of the invention result from the following detailed description and the entirety of the patent claims.

### Brief description of the drawings

The drawing used to illustrate the embodiment example shows:
- Fig. 1: A schematic representation of the method steps for the preparation of the insecticide according to the invention.
- Fig. 2: A schematic representation of the method steps for the preparation of the insecticide according to the invention including the additional steps of pressing the biomass to obtain a liquid residue and mixing the liquid residue with a liquid component (steps d1) and e1)).

### Ways of carrying out the invention

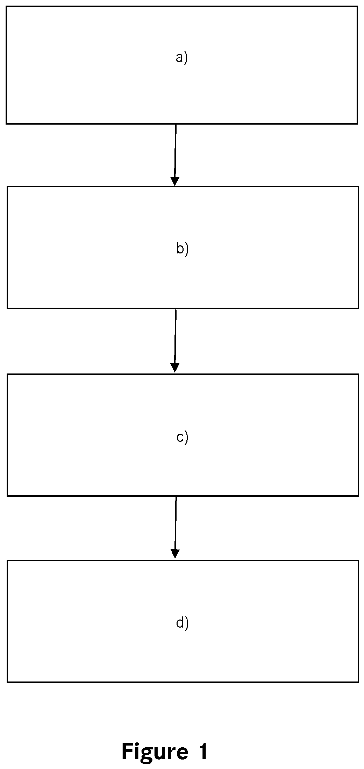

**Fig. 1** shows an exemplary schematic representation of the method steps for producing the insecticide according to the invention. These method steps comprise:
a) mixing the thistle oil and/or rapeseed oil, the tea tree leaves and/or tea tree wood and the black pine resin and/or scots pine resin;
b) treating the mixture from step a) for 1 to 3 hours, preferably for 2 hours, at a temperature of 50 - 60 °C, preferably 55 - 60 °C, while stirring the mixture regularly;
c) separating a biomass from a liquid component of the mixture from step b)
d) adding the at least one emulsifier to the liquid component from step c) to obtain a concentrate.

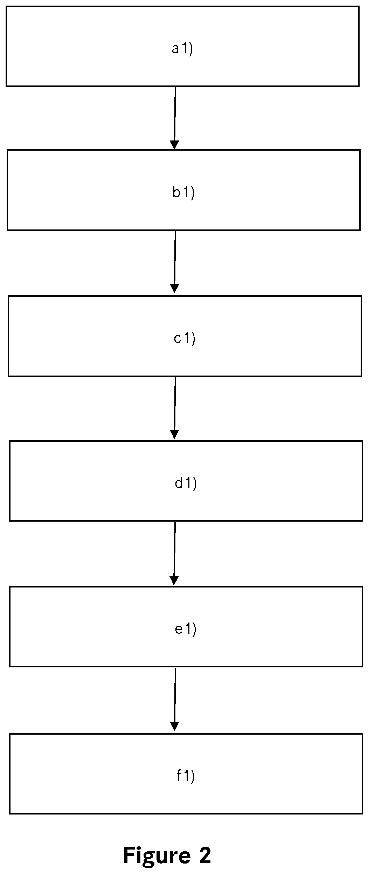

**Fig. 2** shows an exemplary schematic representation of the method steps for producing the insecticide according to the invention including the additional steps of pressing the biomass to obtain a liquid residue and mixing the liquid residue with a liquid component. These method steps comprise:
a1) mixing the thistle oil and/or rapeseed oil, the tea tree leaves and/or tea tree wood and the black pine resin and/or scots pine resin;
b1) treating the mixture from step a1) for 1 to 3 hours, preferably for 2 hours, at a temperature of 50 - 60 °C, preferably 55 - 60 °C, while stirring the mixture regularly;
c1) separating a biomass from a liquid component of the mixture from step b1)
d1) pressing the biomass from step c1) to obtain a liquid residue,
e1) mixing the liquid residue from step d1) with the liquid component from step c1) to obtain a complete liquid solution,
f1) adding the at least one emulsifier to the complete liquid solution from step e1) to obtain a concentrate.

### Experimental tests

First, an insecticide according to the invention "EVO 7" is produced. In a first step, all the ingredients mentioned in Table 1 are mixed together.

**Table 1**

| **Ingredient** | **Amount** |
|---|---|
| Thistle oil | 830 g |
| Tea trea leaves | 100 g |
| Black pine resin | 40 g |

The share of the thistle oil in Table 1 results from its density of approx. 0.93 kg/L. In this case, approx. 0.9 L thistle oil is used. Subsequently, the mixture is treated for 2 hours at a temperature of 55 °C while stirring the mixture regularly. In the next steps, the mixture is separated into a biomass part and a liquid component and 40 g of Croda Sp Tween^{™} 22, an emulsifier, is added to the liquid component. The result is an insecticide concentrate. The concentrate is then diluted with 101 L water. The result is an aqueous insecticide solution ready for use.

### Example 1

The above produced insecticide "EVO 7" was used to control thrips (*Franliniella occidentalis*) on strawberry plants.

**Table 2**

| **Strawberry plant** | **Average No. of thrips / flower** |
|---|---|
| Strawberry plants untreated | 10 |
| Strawberry plants treated with insecticide "EVO 7" (1.6 L/h) | 1.8 |

Table 2 refers on the one hand to untreated strawberry plants, i.e. plants that have not been treated with any insecticide, and on the other hand to strawberry plants that have been treated with the insecticide according to the invention "EVO 7". The insecticide was administred in a dose of 1.6 liters per hectare and has been applied twice at intervals of 4 days. All plant parts were treated (i.e. leaves, flowers, stems). The evaluation was done 3 days after the last application. The evaluation was conducted by counting the number of thrips remaining on the flowers of the strawberry plants and the average value across all plants in each category was taken.

Table 2 shows a reduction of thrips in treated strawberry plants by 82 % in comparison to untreated strawberry plants. These results confirm that the insecticide "EVO 7" is highly efficient against thrips.

### Example 2

The above produced insecticide "EVO 7" was used to control whiteflies (*Aleurodesproletella*) on a mix of Flower sprout and Brussels sprouts.

**Table 3**

| **Flower sprout/Brussels sprouts mix** | **Average No. of whiteflies per leaf** |
|---|---|
| Untreated | 15 |
| Treated with "EVO 7" (1 L/h) | 6 |
| Treated with "EVO 7_S" (1 L/h) | 9 |

Table 3 illustrates the average number of whiteflies per leaf in a mix of flower sprout and Brussels sprouts (hereinafter called "mix"), wherein Table 3 refers to an untreated mix, i.e. a mix that has not been treated with any insecticide, a mix treated with the the insecticide "EVO 7" and a mix treated with an insecticide "EVO 7_S". The only difference between "EVO 7" and "EVO 7_S" is that in "EVO 7_S" sunflower oil is used instead of thistle oil. Both insecticides were administered in a dose of 1 liter / hectare. The insecticides have been applied 6 times at intervals of 7 - 10 days. The evaluation was done 6 days after the last application and the average value across all plants in each category was taken. The evaluation was conducted by counting the number of whiteflies remaining on the leaves, whereas no distinction was made between the leaves of Flower sprout and Brussels sprouts.

Table 3 shows a reduction of whiteflies per leaf in a flower sprout/Brussels sprouts mix treated with "EVO 7" by 60 % in comparison to an untreated Flower sprout/Brussels sprout mix and by 40 % in comparison to a Flower sprout/Brussels sprout mix treated with "EVO 7_S". These results confirm that the insecticide "EVO 7" is highly efficient against whiteflies. Furthermore, the results show that the insecticide according to the invention has a synergistic effect, since it exhibits a higher efficiency in comparison to the insecticide "EVO 7_S", which comprises sunflower oil.

### Example 3

The above produced insecticide "EVO 7" was used to control thrips (*Thrips tabaci*) on onion plants.

**Table 4**

| **Onion plants** | **Average No. of thrips per plant** |
|---|---|
| Untreated | 5.3 |
| Treated with "EVO 7" (5 L/h) | 1.6 |
| Treated with "EVO 7_S" (5 L/h) | 4.4 |

Table 4 illustrates the number of thrips per onion plant and refers to untreated onion plants, i.e. onion plants that have not been treated with any insecticide, onion plants treated with the the insecticide "EVO 7" and onion plants treated with the insecticide "EVO 7_S". "EVO 7_S" has already been introduced in Example 2. The only difference between "EVO 7" and "EVO 7_S" is that in "EVO 7_S" sunflower oil is used instead of thistle oil. Both insecticides were administered in a dose of 5 liter / hectare. The insecticides have been applied twice at intervals of 7 days. The evaluation was done 5 days after the last application. The evaluation was conducted by counting the number of thrips per plant of 6 plants in total in each category and taking the average value.

Table 4 shows a reduction of thrips per onion plant treated with "EVO 7" by 70 % in comparison to untreated onion plants and by 64 % in comparison to onion plants treated with "EVO 7_S". These results confirm that the insecticide "EVO 7" is highly efficient against thrips. Furthermore, the results show that the insecticide according to the invention has a synergistic effect, since it exhibits a higher efficiency in comparison to the insecticide "EVO 7_S", which comprises sunflower oil.

Based on the experimental tests according to Examples 1 - 3 it has been shown that the insecticide "EVO 7" as described above is efficient against various pests such as thrips and whiteflies on different plants such as strawberry plants, onion plants and/or Flower sprout/Brussels sprouts.

Examples 1 - 3 are in no way concluding examples. Furthermore, the insecticide "EVO 7" is an example of an insecticide according to the invention, however, the effect is observed over the whole range of the embodiments of the invention as described in this application.

## Claims

1. Insecticide comprising
- thistle oil and/or rapeseed oil,
- a first component (A) based on tea tree leaves and/or tea tree wood,
- a second component (B) based on black pine resin and/or scots pine resin,
as well as
- at least one emulsifier.

2. Insecticide according to claim 1, where the insecticide additionally comprises water, preferably distilled water.

3. Insecticide according to one of the aforementiond claims, where the first component (A) and the second component (B) are present as liquid extracts in the thistle oil and/or rapeseed oil.

4. Insecticide according to one of the aforementioned claims, where the insecticide is effective against sucking insects.

5. Insecticide according to one of the aforementioned claims, where the emulsifier is selected from the group of poly-ethoxylated esters, polysorbates, glyceryl esters and/or derivates thereof.

6. Insecticide according to one of the aforementioned claims, where the emulsifier is selected from Croda Sp Tween^{™} 22 and/or Croda Etocas^{™} 35.

7. Insecticide according to one of the aforementioned claims, where the insecticide comprises 1 - 10 wt. Y, preferably 2 - 8 wt. Y, in particular 3 - 6 wt. Y, especially 4 wt. Y, of emulsifier, based on the total weight of the insecticide.

8. Insecticide according to one of the aforementioned claims, where the ratio between i) a mixture of the thistle oil and/or rapeseed oil, the first component (A), the second component (B) and the at least one emulsifier and ii) water is between 1:50 and 1:150, preferably between 1:60 and 1:140, in particular between 1:80 and 1:120, especially 1:100.

9. Insecticide according to one of the aforementioned claims, where the tea tree leaves and/or tea tree wood are present in crushed form.

10. Method for producing an insecticide, especially an insecticide according to any of claims 1 to 9, comprising the steps of:
a) mixing a thistle oil and/or rapeseed oil, tea tree leaves and/or tea tree wood and black pine resin and/or scots pine resin;
b) treating the mixture from step a) for 1 to 3 hours, preferably for 2 hours, at a temperature of 50 - 60 °C, preferably 55 - 60 °C, while stirring the mixture regularly;
c) separating a biomass from a liquid component of the mixture from step b)
d) adding at least one emulsifier to the liquid component from step c) to obtain a concentrate.

11. Method according to claim 10, where the weight ratio between i) the thistle oil and/or rapeseed oil and ii) the tea tree leaves and/or the tea tree wood is between 1:1 and 20:1, preferably between 2:1 and 19:1, in particular between 3:1 and 18:1.

12. Method according to one of claims 10 or 11, where the weight ratio between i) the thistle oil and/or rapeseed oil and ii) the black pine resin and/or scots pine resin is between 100:1 and 10:1, preferably between 95:1 and 15:1, in particular between 90:1 and 22.5:1.

13. Method according to one of claims 10 to 12, where the weight ratio of i) the tea tree leaves and/or the tea tree wood and ii) the black pine resin and/or scots pine resin is between 0.5:1 and 50:1, preferably between 1:1 and 40:1, especially between 1.25:1 and 30:1.

14. Method according to one of claims 10 to 13, where the black pine resin and/or scots pine resin are harvested by hand.
